# EUROPEAN PATENT APPLICATION

(11) **EP 3 477 744 A1**
(43) Date of publication of application: **01.05.2019**
(21) Application number: 17839076.1
(22) Date of filing: 23.06.2017
(51) Int. Cl.: H01M 4/13, H01M 4/133, H01M 4/62

(54) **LITHIUM ION BATTERY ELECTRODE AND LITHIUM ION BATTERY**

(30) Priority: 10.08.2016 JP 2016157482
(71) Applicant: NEC Energy Devices, Ltd., Chuo-ku Sagamihara-shi Kanagawa 252-0254 (JP)
(72) Inventor: KONO Yasutaka, Sagamihara-shi Kanagawa 252-5298 (JP)
(74) Representative: Glawe, Delfs, Moll
(86) International application number: PCT/JP2017/023217
(87) International publication number: WO 2018/030002

(57) **Abstract**

An electrode for a lithium-ion battery (100) of the present invention is a high-density electrode for a lithium-ion battery (100) including a collector layer (101), and a negative electrode active material layer (103) which is provided on at least one surface of the collector layer (101) and includes a negative electrode active material, a water-based binder resin, a thickener, and a conductive auxiliary agent, in which a density of the negative electrode active material layer (103) is equal to or more than 1.55 g/cm³, and an electrolytic solution soaking time into an electrode, which is measured using the following method 1, is equal to or longer than 10 seconds and equal to or shorter than 55 seconds.

(Method 1: In a temperature environment of 25°C, 5 µL of an electrolytic solution obtained by dissolving LiPF₆ as an electrolyte in a solvent mixture of ethylene carbonate and diethyl carbonate (a volume ratio between ethylene carbonate and diethyl carbonate is 3:7) so as to obtain a concentration of 1.0 mol/L is added dropwise to a surface opposite to a collector layer (101) side of the negative electrode active material layer (103) of the electrode for a lithium-ion battery (100) from a location 0.5 cm away from the surface of the negative electrode active material layer (103) in a vertical direction. Next, a time taken for a liquid droplet of the electrolytic solution to become unobservable from the surface of the negative electrode active material layer (103) from the dropwise addition of the electrolytic solution is measured, and the time is considered as the electrolytic solution soaking time into the electrode.)

## Description

### TECHNICAL FIELD

The present invention relates to an electrode for a lithium-ion battery and a lithium-ion battery.

### BACKGROUND ART

Generally, a negative electrode that is used in a lithium-ion battery is mainly constituted of a negative electrode active material layer and a collector layer. The negative electrode active material layer is obtained by, for example, applying and drying a negative electrode slurry including a negative electrode active material, a water-based binder resin, a thickener, a conductive auxiliary agent, or the like on a surface of the collector layer such as a metal foil.

As a technique regarding the above-described electrode for a lithium-ion battery, for example, techniques described in Patent Document 1 and Patent Document 2 are exemplified.

Patent Document 1 (Japanese Unexamined Patent Publication No. 2013-4241) describes a lithium-ion secondary battery having a collector and an electrode active material layer that is held on the collector and includes an electrode active material and a rubber-based binder, in which the rubber-based binder includes equal to or more than 90% of styrene butadiene rubber having a glass transition temperature of equal to or higher than -40°C and equal to or lower than -10°C in terms of weight proportion.

Patent Document 2 (Pamphlet of International Publication No. WO 2011/001848) describes an electrode for a secondary battery including a collector and an electrode active material layer that is laminated on the collector and includes an active material and a binding agent, in which, as the binding agent, a graft polymer made up of a segment A having a degree of swelling of 100% to 300% relative to an electrolytic solution and a segment B having a degree of swelling of 500% to 50,000% relative to the electrolytic solution or being soluble in the electrolytic solution is included.

### RELATED DOCUMENT

### PATENT DOCUMENT

[Patent Document 1] Japanese Unexamined Patent Publication No. 2013-4241
[Patent Document 2] Pamphlet of International Publication No. WO 2011/001848

### SUMMARY OF THE INVENTION

### TECHNICAL PROBLEM

In a lithium-ion battery of the related art, a problem of the precipitation of lithium was not easily caused. However, according to the present inventors' studies, it has been clarified that, when the density of a negative electrode active material layer is increased in order to increase the energy density, it becomes easy for lithium to be precipitated in a negative electrode.

In addition, according to the present inventors' studies, it has been clarified that, when a binder resin having a high degree of swelling relative to an electrolytic solution is used, the precipitation of lithium is suppressed; however, unexpectedly, the cycle characteristics of a battery to be obtained deteriorate.

That is, the present inventors found that, in a lithium-ion battery in which a negative electrode having a high electrode density is used, the suppression of the precipitation of lithium and the improvement of the cycle characteristics have a trade-off relationship.

The present invention has been made in consideration of the above-described circumstances and provides an electrode for a lithium-ion battery capable of realizing a lithium-ion battery having favorable cycle characteristics while suppressing the precipitation of lithium in an electrode even when the electrode density is high.

### SOLUTION TO PROBLEM

The present inventors repeated intensive studies in order to achieve the above-described object. As a result, the present inventors found that the use of a negative electrode having an electrolytic solution soaking time into an electrode in a specific range enables the obtainment of a lithium-ion battery having favorable cycle characteristics while suppressing the precipitation of lithium in the negative electrode even when the electrode density is high and completed the present invention.

According to the present invention,
there is provided a high-density electrode for a lithium-ion battery including:
a collector layer, and
a negative electrode active material layer which is provided on at least one surface of the collector layer and includes a negative electrode active material, a water-based binder resin, a thickener, and a conductive auxiliary agent,
in which a density of the negative electrode active material layer is equal to or more than 1.55 g/cm³, and
in which an electrolytic solution soaking time into an electrode, which is measured using the following method 1, is equal to or longer than 10 seconds and equal to or shorter than 55 seconds.

(Method 1: In a temperature environment of 25°C, 5 µL of an electrolytic solution obtained by dissolving LiPF₆ as an electrolyte in a solvent mixture of ethylene carbonate and diethyl carbonate (a volume ratio between ethylene carbonate and diethyl carbonate is 3:7) so as to obtain a concentration of 1.0 mol/L is added dropwise to a surface opposite to a collector layer side of the negative electrode active material layer of the electrode for a lithium-ion battery from a location 0.5 cm away from the surface of the negative electrode active material layer in a vertical direction. Next, a time taken for a liquid droplet of the electrolytic solution to become unobservable from the surface of the negative electrode active material layer from the dropwise addition of the electrolytic solution is measured, and the time is considered as the electrolytic solution soaking time into the electrode)

In addition, according to the present invention,
there is provided a lithium-ion battery including:
the electrode for a lithium-ion battery.

### ADVANTAGEOUS EFFECTS OF INVENTION

According to the present invention, it is possible to provide an electrode for a lithium-ion battery capable of realizing a lithium-ion battery having favorable cycle characteristics while suppressing the precipitation of lithium in an electrode even when the electrode density is high.

### BRIEF DESCRIPTION OF THE DRAWINGS

The above-described object and other objects, characteristics, and advantages will be further clarified using a preferred embodiment described below and the accompanying drawings below.
FIG. 1 is a cross-sectional view showing an example of a structure of an electrode for a lithium-ion battery of an embodiment according to the present invention.
FIG. 2 is a cross-sectional view showing an example of a structure of a lithium-ion battery of an embodiment according to the present invention.

### DESCRIPTION OF EMBODIMENTS

Hereinafter, an embodiment of the present invention will be described using drawings. In all of the drawings, the same constituent element will be given the same reference sign and will not be repeated. In addition, individual constituent elements in the drawings schematically show shapes, sizes, and positional relationships so that the present invention can be understood, and thus the shapes, the sizes, and the positional relationships do not match actual ones. In addition, in the present embodiment, unless particularly otherwise described, a numerical range "A to B" indicates equal to and more than A and equal to and less than B.

### <Electrode for lithium-ion battery>

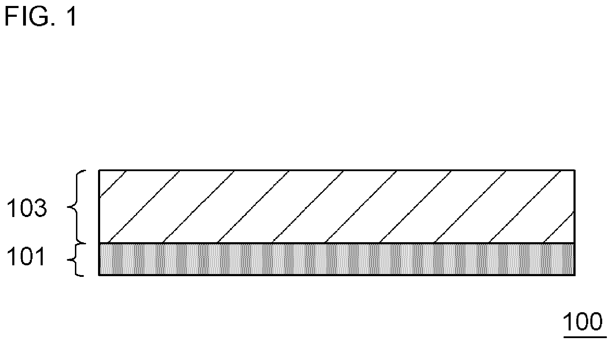

First, an electrode for a lithium-ion battery 100 according to the present embodiment will be described. FIG. 1 is a cross-sectional view showing an example of a structure of the electrode for a lithium-ion battery 100 of an embodiment according to the present invention.

The electrode for a lithium-ion battery 100 of an embodiment according to the present invention is a high-density electrode for a lithium-ion battery including a collector layer 101 and a negative electrode active material layer 103 which is provided on at least one surface of the collector layer 101 and includes a negative electrode active material, a water-based binder resin, a thickener, and a conductive auxiliary agent and in which a density of the negative electrode active material layer 103 is equal to or more than 1.55 g/cm³.

In addition, an electrolytic solution soaking time into an electrode is equal to or longer than 10 seconds and equal to or shorter than 55 seconds.

Here, the electrolytic solution soaking time into an electrode can be measured using the following method.

First, in a temperature environment of 25°C (dried air atmosphere, dew point: equal to or lower than -40°C), 5 µL of an electrolytic solution obtained by dissolving LiPF₆ as an electrolyte in a solvent mixture of ethylene carbonate and diethyl carbonate (the volume ratio between ethylene carbonate and diethyl carbonate is 3:7) so as to obtain a concentration of 1.0 mol/L is added dropwise to a surface opposite to a collector layer 101 side of the negative electrode active material layer 103 of the electrode for a lithium-ion battery 100 from a location 0.5 cm away from the surface of the negative electrode active material layer 103 in a vertical direction. Next, a time taken for a liquid droplet of the electrolytic solution to become unobservable from the surface of the negative electrode active material layer 103 (a point in time when all of the dropwise-added liquid infiltrates into the negative electrode active material layer 103 and liquid droplets disappear) from the dropwise addition of the electrolytic solution is measured, and the time is considered as the electrolytic solution soaking time into the electrode.

Here, at point when the liquid droplet of the electrolytic solution becomes unobservable refers to a point when a boundary between a contact surface between the electrolytic solution and the negative electrode active material layer 103 and a non-contact surface cannot be visually determined.

In addition, the electrolytic solution can be added dropwise from a nozzle tip of a dispenser.

According to the present inventors' studies, it has been clarified that, when the density of a negative electrode active material layer is increased in order to increase the energy density, it becomes easy for lithium to be precipitated in a negative electrode. Furthermore, according to the present inventors' studies, it has been clarified that, when a binder resin having a high degree of swelling relative to an electrolytic solution is used, the precipitation of lithium is suppressed; however, unexpectedly, the cycle characteristics of a battery to be obtained deteriorate.

That is, the present inventors found that, in a lithium-ion battery in which a negative electrode having a high electrode density is used, the suppression of the precipitation of lithium and the improvement of the cycle characteristics have a trade-off relationship.

Therefore, as a result of intensive studies, the present inventors found that the use of a negative electrode having an electrolytic solution soaking time into an electrode, which is measured using the above-described method, in a specific range enables the obtainment of a lithium-ion battery having favorable cycle characteristics while suppressing the precipitation of lithium in the negative electrode even when the electrode density is high.

The upper limit of the electrolytic solution soaking time into the electrode is equal to or shorter than 55 seconds, preferably equal to or shorter than 50 seconds, more preferably equal to or shorter than 45 seconds, and particularly preferably equal to or shorter than 40 seconds.

In the electrode for a lithium-ion battery 100 according to the present embodiment, when the electrolytic solution soaking time into the electrode is set to equal to or shorter than the above-described upper limit value, it is possible to suppress the precipitation of lithium in the electrode even when the electrode density is high.

The lower limit of the electrolytic solution soaking time into the electrode is equal to or longer than 10 seconds, preferably equal to or longer than 15 seconds, more preferably equal to or longer than 20 seconds, and particularly preferably equal to or longer than 25 seconds.

In the electrode for a lithium-ion battery 100 according to the present embodiment, when the electrolytic solution soaking time into the electrode is set to equal to or longer than the above-described lower limit value, it is possible to effectively improve the cycle characteristics of a lithium-ion battery to be obtained.

In addition, in the present embodiment, in a case in which the negative electrode active material layers 103 are provided on both surfaces of the collector layer 101, the electrolytic solution soaking time into the electrode needs to be in the above-described range at least in the negative electrode active material layer 103 on one surface of the collector layer 101, and the electrolytic solution soaking times into the electrode are preferably in the above-described range in the negative electrode active material layers 103 on both surfaces of the collector layer 101 respectively.

The above-described electrolytic solution soaking time into the electrode of the electrode for a lithium-ion battery 100 according to the present embodiment can be realized by highly controlling manufacturing conditions such as (A) the blending fraction of the negative electrode active material layer 103, (B) the kinds of the negative electrode active material, the water-based binder resin, the thickener, and the conductive auxiliary agent which constitute the negative electrode active material layer 103, (C) a method for preparing the negative electrode slurry for forming the negative electrode active material layer 103, (D) a method for drying the negative electrode slurry, and (E) a method for pressing the negative electrode.

Next, the respective components constituting the negative electrode active material layer 103 according to the present embodiment will be described.

The negative electrode active material layer 103 includes a negative electrode active material, a water-based binder resin, a thickener, and a conductive auxiliary agent.

Examples of the negative electrode active material included in the negative electrode active material layer 103 according to the present embodiment include carbon materials such as natural graphite, artificial graphite, resin charcoal, carbon fibers, activated charcoal, hard carbon, and soft carbon; lithium-based metal materials such as lithium metal and lithium alloys; metal materials such as silicon and tin; conductive polymer materials such as polyacene, polyacetylene, and polypyrrole; and the like.

Here, in a lithium-ion battery of the related art, in a case in which the above-described carbon material is used as the negative electrode active material, and the electrode density is high, it becomes particularly easy for lithium to be precipitated in the negative electrode. Therefore, the electrode for a lithium-ion battery 100 according to the present embodiment is capable of more effectively obtaining the effect of the present embodiment in a case in which the carbon material is used as the negative electrode active material. Therefore, the negative electrode active material is preferably a carbon material and particularly preferably a graphite-based material such as natural graphite or artificial graphite since it is possible to more effectively obtain the effect of the present embodiment. The negative electrode active material may be used singly or two or more negative electrode active materials may be used in combination.

An average particle diameter of the negative electrode active material is preferably equal to or more than 1 µm, more preferably equal to or more than 5 µm, still more preferably equal to or more than 8 µm, and particularly preferably equal to or more than 10 µm from the viewpoint of suppressing a decrease in the charge and discharge efficiency by suppressing a side reaction during charging and discharging and is preferably equal to or less than 40 µm, more preferably equal to or less than 30 µm, and particularly preferably equal to or less than 20 µm from the viewpoint of input and output characteristics or electrode production (the flatness of the electrode surface or the like). Here, the average particle diameter refers to the particle diameter at a cumulative value of 50% (median diameter: D₅₀) in a (volume-based) particle size distribution by a laser diffraction scattering method.

When the total amount of the negative electrode active material layer 103 is assumed as 100 parts by mass, the content of the negative electrode active material is preferably equal to or more than 85 parts by mass and equal to or less than 99 parts by mass, more preferably equal to or more than 90 parts by mass and equal to or less than 98 parts by mass, and still more preferably equal to or more than 93 parts by mass and equal to or less than 97.5 parts by mass.

As the water-based binder resin that is included in the negative electrode active material layer 103 according to the present embodiment, it is possible to use, for example, a rubber-based binder resin, an acrylic binder resin, or the like. Meanwhile, in the present embodiment, the water-based binder resin refers to a resin that is dispersed in water and capable of forming an emulsion aqueous solution.

The water-based binder resin according to the present embodiment is formed of latex particles and is preferably dispersed in water and used as an emulsion aqueous solution. That is, the water-based binder resin that is included in the negative electrode active material layer 103 according to the present embodiment is preferably formed of latex particles of a water-based binder resin. In such a case, it is possible to add the water-based binder resin to the negative electrode active material layer 103 without impairing the contact between the negative electrode active materials, between the conductive auxiliary agents, or between the negative electrode active material and the conductive auxiliary agent.

Meanwhile, into water in which the water-based binder resin is dispersed, a solvent that is highly hydrophilic to water such as an alcohol may be mixed.

Examples of the rubber-based binder resin include styrene-butadiene copolymer rubber and the like.

Examples of the acrylic binder resin include polymers (monopolymers or copolymers) including the unit of acrylic acid, methacrylic acid, an acrylic acid ester, a methacrylic acid ester, acrylate, or methacrylate (hereinafter, referred to as the "acrylic unit") and the like. As the copolymers, copolymers including the acrylic unit and a styrene unit, copolymers including the acrylic unit and a silicon unit, and the like.

The water-based binder resin may be used singly or two or more water-based binder resins may be used in combination. Among these, styrene-butadiene copolymer rubber is particularly preferred from the viewpoint of its excellency in the binding property, the affinity to the electrolytic solution, the price, the electrochemical stability, and the like.

The electrolytic solution swelling percentage of the water-based binder resin is preferably equal to or more than 100% and equal to or less than 650%, more preferably equal to or more than 100% and equal to or less than 600%, and still more preferably equal to or more than 100% and equal to or less than 500%. When the electrolytic solution swelling percentage of the water-based binder resin is equal to or less than the above-described lower limit value, it is possible to improve the electrolytic solution soaking property into the electrode. In addition, when the electrolytic solution swelling percentage of the water-based binder resin is equal to or less than the above-described upper limit value, it is possible to make the binding property of the water-based binder resin in the lithium-ion battery more favorable, and consequently, it is possible to make the cycle characteristics of a lithium-ion battery to be obtained more favorable.

The electrolytic solution swelling percentage of the water-based binder resin can be measured using the following method 2.

Method 2: A 500 µm-thick water-based binder resin film made of the water-based binder resin is produced, and the mass of the water-based binder resin film is represented by Wo. Next, the water-based binder resin film is immersed in a solvent mixture of ethylene carbonate and diethyl carbonate (the volume ratio between ethylene carbonate and diethyl carbonate was 3:7) at 60°C for 24 hours. Next, the water-based binder resin film is taken out from the solvent mixture, the solvent mixture attached to the film surface is wiped, and the mass (W₁) of the water-based binder resin film is measured. The electrolytic solution swelling percentage (%) of the water-based binder resin is calculated using (W₁/W₀)x100.

The styrene-butadiene copolymer rubber is a copolymer including styrene and 1,3-butadiene as main components. Here, the main components mean that, in the styrene-butadiene copolymer rubber, the total content of a styrene-derived constituent unit and a 1,3-butadiene-derived constituent unit is equal to or more than 50% by mass in all of the polymerization units of the styrene-butadiene copolymer rubber.

The mass ratio (St/BD) between the styrene-derived constituent unit (hereinafter, also referred to as St) and the 1,3-butadiene-derived constituent unit (hereinafter, also referred to as BD) is, for example, 10/90 to 90/10.

Here, the electrolytic solution swelling percentage (%) of the styrene-butadiene copolymer rubber can be controlled by, for example, adjusting St/BD or the copolymerization amounts of monomer components other than styrene and 1,3-butadiene which will be described below. For example, as the content of the styrene-derived constituent unit increases, there is a tendency that the electrolytic solution swelling percentage of the styrene-butadiene copolymer rubber decreases.

The styrene-butadiene copolymer rubber may be obtained by copolymerizing the monomer components other than styrene and 1,3-butadiene. Examples thereof include conjugated diene-based monomers, unsaturated carboxylic acid monomers, other well-known copolymerizable monomers, and the like.

Examples of the conjugated diene-based monomers include isoprene, 2,3-dimethyl-1,3-butadiene, 1,3-pentadiene, piperylene, and the like.

Examples of the unsaturated carboxylic acid monomers include acrylic acid, methacrylic acid, maleic acid, fumaric acid, itaconic acid, and the like.

A method for manufacturing the styrene-butadiene copolymer rubber is not particularly limited, but the styrene-butadiene copolymer rubber is preferably manufactured using an emulsification polymerization method. The use of the emulsification polymerization method enables the obtainment of latex particles including the styrene-butadiene copolymer rubber.

As the emulsification polymerization method, a well-known method of the related art is used. For example, the styrene-butadiene copolymer rubber can be manufactured by adding styrene, 1,3-butadiene, furthermore, a variety of copolymerizable monomer components described above, and a polymerization initiator, preferably, in the presence of an emulsifier and emulsion-polymerizing the components in water.

The average particle diameter of the latex particles including the styrene-butadiene copolymer rubber to be obtained is not particularly limited, but is preferably equal to or more than 50 nm and equal to or less than 500 nm, more preferably equal to or more than 70 nm and equal to or less than 250 nm, still more preferably equal to or more than 80 nm and equal to or less than 200 nm, and particularly preferably equal to or more than 90 nm and equal to or less than 150 nm. When the average particle diameter is in the above-described range, the balance between the swelling, elution, and binding property of the water-based binder resin relative to the electrolytic solution and the dispersibility of the particles is superior.

Meanwhile, the average particle diameter of the latex particles in the present embodiment refers to the volume-average particle diameter and can be measured using a dynamic light scattering method.

The average particle diameter of the latex particles by the dynamic light scattering method can be measured as described below. A dispersion liquid of the latex particles is diluted 200 to 1,000 times depending on the solid content. Approximately 5 ml of this diluted liquid is injected into a cell of a measurement instrument (for example, Microtrac particle size distribution analyzer manufactured by Nikkiso Co., Ltd.), the refractive index conditions of a solvent (water in the present embodiment) and a polymer suitable for the sample are input, and then the measurement is carried out. At this time, the peak of the obtained volume particle diameter distribution data is considered as the average particle diameter of the present embodiment.

The emulsifier is not particularly limited, and examples thereof include sodium dodecylbenzene sulfonate, sodium lauryl sulfate, sodium dodecyl diphenyl ether disulfonate, sodium succinate dialkyl ester sulfonate, and the like.

The polymerization initiator is not particularly limited, and examples thereof include sodium persulfate, ammonium persulfate, potassium persulfate, and the like.

When the total amount of the negative electrode active material layer 103 is assumed as 100 parts by mass, the content of the water-based binder resin is preferably equal to or more than 0.5 parts by mass and equal to or less than 5.0 parts by mass, more preferably equal to or more than 0.8 parts by mass and equal to or less than 4.0 parts by mass, and still more preferably equal to or more than 1.0 part by mass and equal to or less than 3.0 parts by mass. When the content of the water-based binder resin is in the above-described range, the balance among the coatability of the negative electrode slurry, the binding property of the water-based binder resin, and the battery characteristics are superior.

In addition, when the content of the water-based binder resin is equal to or less than the upper limit value, the fraction of the negative electrode active material increases, and the capacity per electrode mass increases, which is preferable. When the content of the water-based binder resin is equal to or more than the lower limit value, electrode peeling is suppressed, which is preferable.

In addition, in a case in which the latex particles are used as the water-based binder resin, the ratio of the average particle diameter of the negative electrode active material to the average particle diameter of the latex particles is preferably equal to or more than 50 and equal to or less than 200 and more preferably equal to or more than 80 and equal to or less than 150. When the ratio of the average particle diameter is in the above-described range, it is possible to improve the soaking property of the electrolytic solution into the electrode. As a result, it is possible to further shorten the soaking time into the electrode.

The reason for the improvement of the electrolytic solution soaking property into the electrode is not clear, but is assumed that, when the above-described ratio of the average particle diameter is set, the dispersibility of the water-based binder resin in the negative electrode slurry improves, consequently, the dispersion state of the water-based binder resin in the negative electrode active material layer 103 to be obtained changes, and the affinity to the electrolytic solution changes.

Examples of the thickener that is included in the negative electrode active material layer 103 according to the present embodiment include water-soluble polymers such as cellulose-based polymers such as carboxymethyl cellulose, carboxyethyl cellulose, methylcellulose, ethyl cellulose, hydroxymethyl cellulose, hydroxypropyl cellulose, and carboxyethylmethyl cellulose and ammonium salts and alkali metal salts thereof; polycarboxylic acid; polyethylene oxide; polyvinylpyrrolidone; polyacrylates salts such as sodium polyacrylate; and polyvinyl alcohol.

Among these, at least one thickener selected from the group consisting of cellulose-based polymers, ammonium salts of a cellulose-based polymer, and alkali metal salts of a cellulose-based polymer is preferred, and carboxymethyl cellulose, ammonium salts of carboxymethyl cellulose, and alkali metal salts of carboxymethyl cellulose are more preferred.

The thickener may be used singly or two or more thickeners may be used in combination.

When the total amount of the negative electrode active material layer 103 is assumed as 100 parts by mass, the content of the thickener is preferably equal to or more than 0.1 parts by mass and equal to or less than 5.0 parts by mass, more preferably equal to or more than 0.3 parts by mass and equal to or less than 3.0 parts by mass, and still more preferably equal to or more than 0.5 part by mass and equal to or less than 2.0 parts by mass. When the amount of the thickener used is in the above-described range, the balance between the coatability of the negative electrode slurry and the binding property of the binder resin is superior.

The conductive auxiliary agent that is included in the negative electrode active material layer 103 according to the present embodiment is not particularly limited as long as the conductive auxiliary agent improves the conductivity of the electrode, and examples thereof include carbon black, Ketjen black, acetylene black, natural graphite, artificial graphite, carbon fibers, and the like. The conductive auxiliary agent may be used singly or two or more conductive auxiliary agents may be used in combination.

When the total amount of the negative electrode active material layer 103 is assumed as 100 parts by mass, the content of the conductive auxiliary agent is preferably equal to or more than 0.05 parts by mass and equal to or less than 3.0 parts by mass, more preferably equal to or more than 0.08 parts by mass and equal to or less than 2.0 parts by mass, and still more preferably equal to or more than 0.1 part by mass and equal to or less than 1.0 parts by mass. When the content of the conductive auxiliary agent is in the above-described range, the balance among the coatability of the negative electrode slurry, the binding property of the water-based binder resin, and the battery characteristics are superior.

In addition, when the content of the conductive auxiliary agent is equal to or less than the upper limit value, the fraction of the negative electrode active material increases, and the capacity per electrode mass increases, which is preferable. When the content of the conductive auxiliary agent is equal to or more than the lower limit value, the conductivity of the negative electrode becomes more favorable, which is preferable.

In the negative electrode active material layer 103 according to the present embodiment, when the total amount of the negative electrode active material layer 103 is assumed as 100 parts by mass, the content of the negative electrode active material is preferably equal to or more than 85 parts by mass and equal to or less than 99 parts by mass, more preferably equal to or more than 90 parts by mass and equal to or less than 98 parts by mass, and still more preferably equal to or more than 93 part by mass and equal to or less than 97.5 parts by mass. In addition, the content of the water-based binder resin is preferably equal to or more than 0.5 parts by mass and equal to or less than 5.0 parts by mass, more preferably equal to or more than 0.8 parts by mass and equal to or less than 4.0 parts by mass, and still more preferably equal to or more than 1.0 part by mass and equal to or less than 3.0 parts by mass. In addition, the content of the thickener is preferably equal to or more than 0.1 parts by mass and equal to or less than 5.0 parts by mass, more preferably equal to or more than 0.3 parts by mass and equal to or less than 3.0 parts by mass, and still more preferably equal to or more than 0.5 part by mass and equal to or less than 2.0 parts by mass. In addition, the content of the conductive auxiliary agent is preferably equal to or more than 0.05 parts by mass and equal to or less than 3.0 parts by mass, more preferably equal to or more than 0.08 parts by mass and equal to or less than 2.0 parts by mass, and still more preferably equal to or more than 0.1 part by mass and equal to or less than 1.0 parts by mass.

When the contents of the respective components constituting the negative electrode active material layer 103 are in the above-described ranges, the balance between the handleability of the electrode for a lithium-ion battery 100 and the battery characteristics of a lithium-ion battery to be obtained are particularly excellent.

The density of the negative electrode active material layer 103 is equal to or more than 1.55 g/cm³, but is preferably equal to or more than 1.60 g/cm³, more preferably equal to or more than 1.65 g/cm³, and particularly preferably equal to or more than 1.70 g/cm³ from the viewpoint of further improving the energy density of a lithium-ion battery to be obtained.

The upper limit of the density of the negative electrode active material layer 103 is not particularly limited, but is preferably equal to or less than 1.90 g/cm³ from the viewpoint of further suppressing the precipitation of lithium in the electrode by improving the soaking property of the electrolytic solution into the electrode.

The density of the negative electrode active material layer 103 is can be obtained by measuring the mass and thickness of a predetermined size (for example, 5 cm x 5 cm) of the negative electrode active material layer 103, calculating the mass per unit volume, and obtaining the density.

The thickness of the negative electrode active material layer 103 is not particularly limited and can be appropriately set depending on desired characteristics. For example, the thickness can be set to be thick from the viewpoint of the energy density and can be set to be thin from the viewpoint of the output characteristics. The thickness of the negative electrode active material layer 103 can be appropriately set in a range of, for example, 50 to 1,000 µm and is preferably 100 to 800 µm and more preferably 120 to 500 µm.

Here, in a lithium-ion battery of the related art, as the thickness of the negative electrode active material layer increases, it becomes easier for lithium to be precipitated in the negative electrode. Therefore, as the thickness of the negative electrode active material layer 103 increases, it is possible to more effectively obtain the effect of the present embodiment. Therefore, the thickness of the negative electrode active material layer 103 is more preferably equal to or more than 120 µm, more preferably equal to or more than 140 µm, and particularly preferably equal to or more than 160 µm since it is possible to more effectively obtain the effect of the present embodiment.

The collector layer 101 according to the present embodiment is not particularly limited, for example, copper, stainless steel, nickel, titanium, or an alloy thereof can be used, but copper is particularly preferred from the viewpoint of the price, the ease of procurement, the electrochemical stability, and the like. In addition, the shape of the collector layer 101 is also not particularly limited, but a flat plate-shaped or mesh-shaped collector layer is preferably used in a thickness range of 0.001 to 0.5 mm.

### <Method for manufacturing electrode for lithium-ion battery>

Next, a method for manufacturing the electrode for a lithium-ion battery 100 according to the present embodiment will be described.

The method for manufacturing the electrode for a lithium-ion battery 100 according to the present embodiment is different from a method for manufacturing an electrode of the related art. In order to obtain the electrode for a lithium-ion battery 100 according to the present embodiment having an electrolytic solution soaking time into the electrode in the above-described range, it is important to highly control manufacturing conditions such as the blending fraction of the negative electrode active material layer 103, the kinds of the respective components constituting the negative electrode active material layer 103, a method for preparing the negative electrode slurry for forming the negative electrode active material layer 103, a method for drying the negative electrode slurry, and a method for pressing the negative electrode. That is, it is possible to obtain the electrode for a lithium-ion battery 100 according to the present embodiment for the first time using a manufacturing method in which a variety of factors regarding the following five conditions (A) to (E) are highly controlled.
(A) The blending fraction of the negative electrode active material layer 103
(B) The kinds of the negative electrode active material, the water-based binder resin, the thickener, and the conductive auxiliary agent which constitute the negative electrode active material layer 103
(C) A method for preparing the negative electrode slurry for forming the negative electrode active material layer 103
(D) A method for drying the negative electrode slurry
(E) A method for pressing the negative electrode

However, for the electrode for a lithium-ion battery 100 according to the present embodiment, with a precondition that a variety of the factors regarding the above-described five conditions are highly controlled, it is possible to employ, for example, a variety of specific manufacturing conditions such as a kneading time, a kneading temperature, or the like of the negative electrode slurry. In other words, the electrode for a lithium-ion battery 100 according to the present embodiment can be produced by employing a well-known method except for the fact that a variety of the factors regarding the above-described five conditions are highly controlled.

Hereinafter, with a precondition that a variety of the factors regarding the above-described five conditions are highly controlled, an example of the method for manufacturing the electrode for a lithium-ion battery 100 according to the present embodiment will be described.

The method for manufacturing the electrode for a lithium-ion battery 100 according to the present embodiment preferably includes three steps of (1) to (3) below.
(1) A step of preparing the negative electrode slurry by mixing the negative electrode active material, the water-based binder resin, the thickener, and the conductive auxiliary agent,
(2) A step of forming the negative electrode active material layer 103 by applying and drying the obtained negative electrode slurry on the collector layer 101, and
(3) A step of pressing the negative electrode active material layer 103 formed on the collector layer 101 together with the collector layer 101

Hereinafter, the respective steps will be described.

First, (1) the negative electrode active material, the water-based binder resin, the thickener, and the conductive auxiliary agent are mixed together, thereby preparing a negative electrode slurry. The kinds or blending fractions of the negative electrode active material, the water-based binder resin, the thickener, and the conductive auxiliary agent are described above and thus will be not be described.

The negative electrode slurry is a slurry obtained by dispersing or dissolving the negative electrode active material, the water-based binder resin, the thickener, and the conductive auxiliary agent in a solvent such as water.

Regarding the mixing order of the respective components, the negative electrode slurry is preferably prepared by mixing the negative electrode active material and the conductive auxiliary agent in a dry manner, then, adding an emulsion aqueous solution of the water-based binder resin, the thickener solution, and, furthermore, a solvent such as water as necessary, and mixing the components in a wet manner.

In such a case, the dispersibility of the conductive auxiliary agent and the water-based binder resin in the negative electrode active material layer 103 improves, the eccentric presence of the water-based binder resin, the thickener, and the conductive auxiliary agent on the surface of the negative electrode active material layer 103 can be suppressed, and it is possible to improve the soaking property of the electrolytic solution into the electrode. As a result, it is possible to further shorten the soaking time into the electrode.

At this time, as a mixer being used, a well-known mixer such as a ball mill or a planetary mixer can be used, and there is no particular limitation.

Next, (2) the obtained negative electrode slurry is applied and dried on the collector layer 101, thereby forming the negative electrode active material layer 103. In this step, for example, the negative electrode slurry obtained by the step (1) is applied and dried on the collector layer 101, and the solvent is removed, thereby forming the negative electrode active material layer 103 on the collector layer 101.

As a method for applying the negative electrode slurry onto the collector layer 101, generally, a well-known method can be used. For example, a reverse roll method, a direct roll method, a doctor blade method, a knife method, an extrusion method, a curtain method, a gravure method, a bar method, a dip method, a squeeze method, and the like can be exemplified. Among these, a doctor blade method, a knife method, and an extrusion method are preferred since it becomes possible to obtain a favorable surface state of a coating layer in accordance with properties such as viscosity and a drying property of the negative electrode slurry.

The negative electrode slurry may be applied to only one surface of the collector layer 101 or applied to both surfaces. In the case of being applied to both surfaces of the collector layer 101, the negative electrode slurry may be applied sequentially one by one or applied at the same time to both surfaces. In addition, the negative electrode slurry may be continuously or intermittently applied to the surface of the collector layer 101. The thickness, length, or width of a coating layer can be appropriately determined depending on the size of batteries.

As a method for drying the negative electrode slurry applied onto the collector layer 101, the negative electrode slurry is preferably applied at a low temperature of approximately 40°C to 80°C for a long period of time.

In such a case, the eccentric presence of the water-based binder resin, the thickener, and the conductive auxiliary agent on the surface of the negative electrode active material layer 103 can be suppressed, and it is possible to improve the soaking property of the electrolytic solution into the electrode. As a result, it is possible to further shorten the soaking time into the electrode.

Next, (3) the negative electrode active material layer 103 formed on the collector layer 101 is pressed together with the collector layer 101. As a pressing method, roll pressing capable of increasing the linear pressure and capable of uniformly applying the pressure in the film thickness direction of the negative electrode active material layer 103 is preferred. In such a case, the density on the surface of the negative electrode active material layer 103 becoming extremely higher than the density on the collector layer 101 side can be suppressed, and it is possible to improve the soaking property of the electrolytic solution into the electrode. As a result, it is possible to further shorten the soaking time into the electrode.

### <Lithium-ion battery>

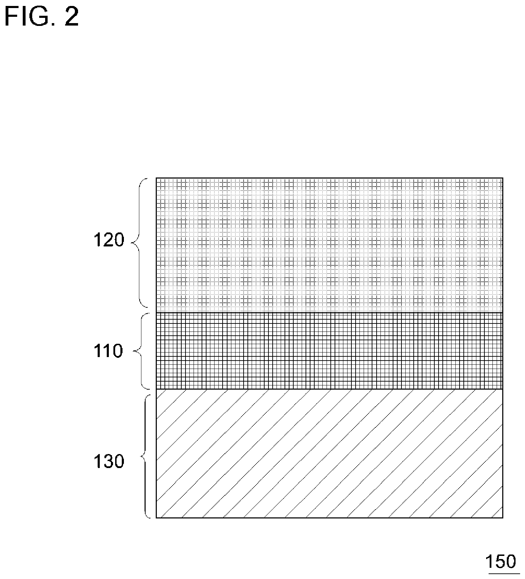

Subsequently, a lithium-ion battery 150 according to the present embodiment will be described. FIG. 2 is a cross-sectional view showing an example of the structure of the lithium-ion battery 150 of the embodiment according to the present invention.

The lithium-ion battery 150 according to the present embodiment includes at least a positive electrode 120, an electrolyte layer 110, and a negative electrode 130, and the negative electrode 130 includes the electrode for a lithium-ion battery 100 according to the present embodiment. In addition, the lithium-ion battery 150 according to the present embodiment may include a separator in the electrolyte layer 110 as necessary.

The lithium-ion battery 150 according to the present embodiment can be produced according to a well-known method.

As the form of the electrodes, for example, a laminate, a coiled body, or the like can be used. As an exterior body, for example, a metal exterior body, an aluminium-laminated exterior body, and the like are exemplified. As the shape of the battery, shapes such as a coin shape, a button shape, a sheet shape, a cylindrical shape, a square shape, and a flat shape are exemplified.

A positive electrode active material that is used in the positive electrode 120 is not particularly limited as long as the positive electrode active material is an ordinary positive electrode active material that can be used in a positive electrode of a lithium-ion battery. Examples thereof include complex oxides between lithium and a transition metal such as lithium-nickel complex oxide, lithium-cobalt complex oxide, lithium-manganese complex oxide, lithium-nickel-manganese complex oxide, lithium-nickel-cobalt complex oxide, lithium-nickel-aluminum complex oxide, lithium-nickel-cobalt-aluminum complex oxide, lithium-nickel-manganese-cobalt complex oxide, lithium-nickel-manganese-aluminum complex oxide, and lithium-nickel-cobalt-manganese-aluminum complex oxide; transition metal sulfides such as TiS₂, FeS, and MoS₂; transition metal oxides such as MnO, V₂O₅, V₆O₁₃, and TiO₂; olivine-type lithium oxides, and the like.

Olivine-type lithium oxides include, for example, at least one element from the group consisting of Mn, Cr, Co, Cu, Ni, V, Mo, Ti, Zn, Al, Ga, Mg, B, Nb, and Fe, lithium, phosphorus, and oxygen. In these compounds, some of elements may be partially substituted with other elements in order to improve the characteristics.

Among them, olivine-type lithium iron phosphorus oxide, lithium-nickel complex oxide, lithium-cobalt complex oxide, lithium-manganese complex oxide, lithium-nickel-manganese complex oxide, lithium-nickel-cobalt complex oxide, lithium-nickel-aluminum complex oxide, lithium-nickel-cobalt-aluminum complex oxide, lithium-nickel-manganese-cobalt complex oxide, lithium-nickel-manganese-aluminum complex oxide, and lithium-nickel-cobalt-manganese-aluminum complex oxide are preferred. These positive electrode active materials do not only have a high action potential but also have a large capacity and a large energy density.

The positive electrode active material may be used singly or two or more positive electrode active materials may be used in combination.

As a positive electrode collector, for example, an aluminium foil can be used.

In addition, the positive electrode 120 can be manufactured using a well-known manufacturing method.

As an electrolyte that is used in the electrolyte layer 110, any of well-known lithium salts can be used and may be selected depending on the kind of the electrode active material. Examples thereof include LiClO₄, LiBF₆, LiPF₆, LiCF₃SO₃, CH₃SO₃Li, LiCF₃CO₂, LiAsF₆, LiSbF₆, LiB₁₀Cl₁₀, LiAlCl₄, LiCl, LiBr, LiB(C₂H₅)₄, CF₃SO₃Li, LiCF₃SO₃, LiC₄F₉SO₃, Li(CF₃SO₂)₂N, short-chain fatty acid lithium carbonate, and the like.

A solvent that is used in the electrolyte layer 110 and dissolves the electrolyte is not particularly limited as long as the solvent is a solvent that is ordinarily used as a liquid component that dissolves electrolytes, and examples thereof include carbonates such as ethylene carbonate (EC), propylene carbonate (PC), butylene carbonate (BC), dimethyl carbonate (DMC), diethyl carbonate (DEC), methyl ethyl carbonate (MEC), and vinylene carbonate (VC); lactones such as γ-butyrolactone and γ-valerolactone; ethers such as trimethoxymethane, 1,2-dimethoxyethane, diethyl ether, 2-ethoxyethane, tetrahydrofuran, and 2-methyltetrahydrofuran; sulfoxides such as dimethylsulfoxide; oxolanes such as 1,3-dioxolane and 4-methyl-1,3-dioxolane; nitrogen-containing solvents such as acetonitrile, nitromethane, formamide, and dimethylformamide; organic acid esters such as methyl formate, methyl acetate, ethyl acetate, butyl acetate, methyl propionate, and ethyl propionate; phosphoric acid triester and diglymes; triglymes; sulfolanes such as sulfolane and methylsulfolane; oxazolidinones such as 3-methyl-2-oxazolidinone; sultones such as 1,3-propane sultone, 1,4-butane sultone, and naphthasultone; and the like. These solvents may be used singly or two or more solvents may be used in combination.

As the separator, for example, a porous separator is exemplified. Examples of the form of the separator include a membrane, a film, a non-woven fabric, and the like.

Examples of the porous separator include polyolefin-based porous separators such as polypropylene-based separators and polyethylene-based separators and porous separators formed of polyvinylidene fluoride, polyethylene oxide, polyacrylonitrile, a polyvinylidene fluoride hexafluoropropylene copolymer, or the like; and the like.

Hitherto, the embodiment of the present invention has been described, but this is an example of the present invention, and it is also possible to employ a variety of constitutions other than what has been described above.

In addition, the present invention is not limited to the embodiment, and modification, improvement, and the like capable of achieving the object of the present invention are also included in the scope of the present invention.

### EXAMPLES

Hereinafter, the present invention will be described using examples and comparative examples, but the present invention is not limited thereto.

### (Example 1)

### <Production of negative electrode>

Graphite (average particle diameter: 16 µm) was used as a negative electrode active material, latex particles made of styrene-butadiene copolymer rubber (average particle diameter: 140 nm, electrolytic solution swelling percentage: 300%) were used as a water-based binder resin, a sodium salt of carboxymethyl cellulose was used as a thickener, and carbon black was used as a conductive auxiliary agent.

First, the negative electrode active material and the conductive auxiliary agent were mixed together in a dry manner. Next, an aqueous solution of the thickener, an emulsion aqueous solution of the water-based binder resin, and water were added to the obtained mixture and mixed together in a wet manner, thereby preparing a negative electrode slurry. This negative electrode slurry was applied and dried on a 15 µm-thick copper foil that was a negative electrode collector, thereby producing a negative electrode.

Here, the negative electrode slurry was dried by being heated at 50°C for 15 minutes. Due to this drying, a negative electrode active material layer was formed on the copper foil. In addition, after the drying, a heating treatment was carried out at 110°C for 10 minutes, thereby completely removing moisture in the negative electrode.

Next, the copper foil and the negative electrode active material layer were pressed using a roll press, thereby obtaining a negative electrode (the thickness of the negative electrode active material layer: 141 µm) in which the density of the negative electrode active material layer was 1.70 g/cm³.

Meanwhile, the blending fractions of the negative electrode active material, the water-based binder resin, the thickener, and the conductive auxiliary agent is 96.7/2/1/0.3 (mass ratio, negative electrode active material/water-based binder resin/thickener/conductive auxiliary agent).

### <Production of positive electrode>

A lithium-nickel-manganese-cobalt complex oxide was used as a positive electrode active material, carbon black was used as a conductive auxiliary agent, and polyvinylidene fluoride was used as a binder resin. These components were dispersed or dissolved in N-methyl-pyrrolidone (NMP), thereby preparing a positive electrode slurry. This positive electrode slurry was applied and dried on a 20 µm-thick aluminum foil that was a positive electrode collector, thereby producing a positive electrode.

### <Production of lithium-ion battery>

The obtained positive electrode and negative electrodes were laminated together through a polyolefin-based porous separator, and a negative electrode terminal or a positive electrode terminal was provided thereto, thereby obtaining a laminate. Next, an electrolytic solution obtained by dissolving LiPF₆ as an electrolyte in a solvent mixture of ethylene carbonate and diethyl carbonate (the volume ratio between ethylene carbonate and diethyl carbonate is 3:7) so as to obtain a concentration of 1.0 mol/L and the obtained laminate were stored in a flexible film, thereby obtaining a lithium-ion battery.

### <Evaluation>

### (1) Measurement of electrolytic solution soaking time into electrode

A 5 cm x 5 cm sample for evaluation cut out from the obtained negative electrode was placed on a horizontal test bed. Next, in a temperature environment of 25°C (dried air atmosphere, dew point: equal to or lower than -40°C), 5 µL of an electrolytic solution obtained by dissolving LiPF₆ as an electrolyte in a solvent mixture of ethylene carbonate and diethyl carbonate (the volume ratio between ethylene carbonate and diethyl carbonate is 3:7) was added dropwise to a surface opposite to a collector layer side of the negative electrode active material layer of the electrode for a lithium-ion battery from a location 0.5 cm away from the surface of the negative electrode active material layer in a vertical direction so as to obtain a concentration of 1.0 mol/L. Next, a time taken for a liquid droplet of the electrolytic solution to became unobservable from the surface of the negative electrode active material layer (a point in time when all of the dropwise-added liquid infiltrated into the negative electrode active material layer and liquid droplets disappeared) from the dropwise addition of the electrolytic solution was measured, and the time was considered as the electrolytic solution soaking time into the electrode.

Meanwhile, the test was carried out 10 times, and the average value was considered as the electrolytic solution soaking time into the electrode.

### (2) Electrolytic solution swelling percentage of water-based binder resin

An emulsion aqueous solution including latex particles made of the water-based binder resin was added dropwise onto a SUS plate and dried on a hot plate set to 100°C, thereby producing a 500 µm-thick water-based binder resin film. The mass of the obtained water-based binder resin film was represented by Wo.

Next, the water-based binder resin film was immersed in 100 mL of a solvent mixture of ethylene carbonate and diethyl carbonate (the volume ratio between ethylene carbonate and diethyl carbonate was 3:7) put into a sample bottle at 60°C for 24 hours. At this time, the sample bottle was sealed by closing the lid. Next, the water-based binder resin film swelling out of the sample bottle was cut out, the solvent mixture attached to the film surface was wiped, and the mass (W₁) of the water-based binder resin film was measured. The electrolytic solution swelling percentage (%) of the water-based binder resin was calculated using (W₁/W₀)x100.

### (3) High-temperature cycle characteristics

The high-temperature cycle characteristics were evaluated using the lithium-ion battery. At a temperature of 45°C, a charge rate was set to 1.0C, a discharge rate was set to 1.0C, a charge end voltage was set to 4.2 V, and a discharge end voltage was set to 3.0 V. The capacity retention (%) is a value obtained by dividing the discharge capacity (mAh) after 500 cycles by the discharge capacity (mAh) at the 10th cycle. A lithium-ion battery having a capacity retention (%) of equal to or more than 85% was evaluated as A, a lithium-ion battery having a capacity retention (%) of equal to or more than 80% and equal to or less than 85% was evaluated as B, and a lithium-ion battery having a capacity retention (%) of less than 80% was evaluated as C.

### (4) Presence or absence of precipitation of lithium

The charge acceptance was evaluated using the lithium-ion battery. The lithium-ion battery was charged at a charge rate of 1.0C to 4.2V, discharged at a discharge rate of 0.2C to 3.0 V, then, the battery was disassembled, the presence or absence of the precipitation of lithium on the negative electrode surface was visually confirmed, and the charge acceptance was evaluated using the following standards.
O: The precipitation of lithium on the negative electrode surface did not occur
X: The precipitation of lithium on the negative electrode surface occurred

### (5) Energy density

The energy density of the lithium-ion battery was evaluated using the following standards.
O: The density of the negative electrode active material layer was equal to or more than 1.55 g/cm³
X: The density of the negative electrode active material layer was less than 1.55 g/cm³

The above-described evaluation results are shown in Table 1.

### (Examples 2 to 4 and Comparative Examples 1 and 2)

Negative electrodes and lithium-ion batteries were produced in the same manner as in Example 1 except for the fact that the water-based binder resin was changed to water-based binder resins shown in Table 1, and the respective evaluations were carried out. The respective evaluation results are shown in Table 1.

Meanwhile, latex particles made of styrene-butadiene copolymer rubber having different electrolytic solution swelling percentages were produced by adjusting the copolymerization ratio between styrene and 1,3-butadiene.

### (Comparative Example 3)

A negative electrode and a lithium-ion battery were produced in the same manner as in Example 1 except for the fact that the density of the negative electrode active material layer was changed to a value shown in Table 1, and the respective evaluations were carried out. The respective evaluation results are shown in Table 1.

### (Comparative Example 4)

A negative electrode and a lithium-ion battery were produced in the same manner as in Example 1 except for the fact that the water-based binder resin was changed to a water-based binder resin shown in Table 1 and the density of the negative electrode active material layer was changed to a value shown in Table 1, and the respective evaluations were carried out. The respective evaluation results are shown in Table 1.

### (Comparative Example 5)

A negative electrode and a lithium-ion battery were produced in the same manner as in Example 2 except for the fact that the drying of the negative electrode slurry was changed to heating at 100°C for 15 minutes, and the respective evaluations were carried out. The respective evaluation results are shown in Table 1.

**[Table 1]**

| | Density of negative electrode active material layer [g/cm³] | Electrolytic solution swelling percentage of water-based binder resin [%] | Electrolytic solution soaking time into electrode [seconds] | High-temperature cycle characteristics | Presence or absence of lithium precipitation | Energy density |
|---|---|---|---|---|---|---|
| Example 1 | 1.70 | 300 | 38 | A | O | O |
| Example 2 | 1.70 | 100 | 50 | A | O | O |
| Example 3 | 1.70 | 500 | 25 | A | O | O |
| Example 4 | 1.70 | 600 | 10 | B | O | O |
| Comparative Example 1 | 1.70 | 50 | 70 | B | X | O |
| Comparative Example 2 | 1.70 | 700 | 5 | C | O | O |
| Comparative Example 3 | 1.50 | 300 | 30 | C | O | X |
| Comparative Example 4 | 1.50 | 50 | 60 | B | O | X |
| Comparative Example 5 | 1.70 | 100 | 60 | B | X | O |

Priority is claimed on the basis of Japanese Patent Application No. 2016-157482, filed on August 10, 2016, the content of which is incorporated herein by reference.

## Claims

1. A high-density electrode for a lithium-ion battery comprising:
a collector layer; and
a negative electrode active material layer which is provided on at least one surface of the collector layer and includes a negative electrode active material, a water-based binder resin, a thickener, and a conductive auxiliary agent,
wherein a density of the negative electrode active material layer is equal to or more than 1.55 g/cm³, and
wherein an electrolytic solution soaking time into an electrode, which is measured using the following method 1, is equal to or longer than 10 seconds and equal to or shorter than 55 seconds.
(method 1: in a temperature environment of 25°C, 5 µL of an electrolytic solution obtained by dissolving LiPF₆ as an electrolyte in a solvent mixture of ethylene carbonate and diethyl carbonate (a volume ratio between ethylene carbonate and diethyl carbonate is 3:7) so as to obtain a concentration of 1.0 mol/L is added dropwise to a surface opposite to a collector layer side of the negative electrode active material layer of the electrode for a lithium-ion battery from a location 0.5 cm away from the surface of the negative electrode active material layer in a vertical direction, next, a time taken for a liquid droplet of the electrolytic solution to become unobservable from the surface of the negative electrode active material layer from the dropwise addition of the electrolytic solution is measured, and the time is considered as the electrolytic solution soaking time into the electrode)

2. The electrode for a lithium-ion battery according to Claim 1,
wherein a thickness of the negative electrode active material layer is equal to or more than 120 µm.

3. The electrode for a lithium-ion battery according to Claim 1 or 2,
wherein the negative electrode active material includes a carbon material.

4. The electrode for a lithium-ion battery according to any one of Claims 1 to 3,
wherein the water-based binder resin is formed of latex particles.

5. The electrode for a lithium-ion battery according to Claim 4,
wherein a ratio of an average particle diameter of the negative electrode active material to an average particle diameter of the latex particles is equal to or more than 50 and equal to or less than 200.

6. The electrode for a lithium-ion battery according to any one of Claims 1 to 5,
wherein the water-based binder resin includes styrene-butadiene copolymer rubber.

7. The electrode for a lithium-ion battery according to any one of Claims 1 to 6,
wherein, when a total amount of the negative electrode active material layer is assumed as 100 parts by mass, a content of the water-based binder resin is equal to or more than 0.5 parts by mass and equal to or less than 5.0 parts by mass.

8. The electrode for a lithium-ion battery according to any one of Claims 1 to 7,
wherein an electrolytic solution swelling percentage of the water-based binder resin, which is measured using the following method 2, is equal to or more than 100% and equal to or less than 650%.
(method 2: a 500 µm-thick water-based binder resin film made of the water-based binder resin is produced, the mass of the water-based binder resin film is represented by Wo, next, the water-based binder resin film is immersed in a solvent mixture of ethylene carbonate and diethyl carbonate (a volume ratio between ethylene carbonate and diethyl carbonate is 3:7) at 60°C for 24 hours, next, the water-based binder resin film is taken out from the solvent mixture, the solvent mixture attached to the film surface is wiped, the mass (W₁) of the water-based binder resin film is measured, and the electrolytic solution swelling percentage (%) of the water-based binder resin is calculated using (W₁/W₀)x100)

9. A lithium-ion battery comprising:
the electrode for a lithium-ion battery according to any one of Claims 1 to 8.
